# EUROPEAN PATENT APPLICATION

(11) **EP 4 807 839 A1**
(43) Date of publication of application: **16.09.2026**
(21) Application number: 24887914.0
(22) Date of filing: 04.11.2024
(51) Int. Cl.: H01M 10/0525, H01M 10/0567, H01M 4/133

(54) **SECONDARY BATTERY AND ELECTRICAL DEVICE**

(30) Priority: 09.11.2023 CN 202311493916
(71) Applicant: Ningde Amperex Technology Limited, Ningde, Fujian 352100 (CN)
(72) Inventor: JIN, Wenbo, Ningde, Fujian 352100 (CN)
(74) Representative: Dehns Germany Partnerschaft mbB
(86) International application number: PCT/CN2024/129783
(87) International publication number: WO 2025/098302

(57) **Abstract**

A secondary battery and an electrical device are disclosed, pertaining to the field of secondary battery technology. The secondary battery includes a negative electrode plate and an electrolyte, where a negative electrode active material in the negative electrode plate has a crystal plane spacing of d₀₀₂ nm and a crystal plane stacking thickness of Lc (nm), 10×d₀₀₂/Lc < 0.109, and the electrolyte includes fluoroethylene carbonate and lithium difluorophosphate, where based on a mass of the electrolyte, a mass percentage of fluoroethylene carbonate is S1% and a mass percentage of lithium difluorophosphate is S2%, 1.5 ≤ S1 ≤ 5.0, and S1 ≥ 4×d₀₀₂ + 0.8×S2. The secondary battery exhibits good low-temperature discharge rate performance.

## Description

### CROSS-REFERENCE TO RELATED APPLICATIONS

This application claims priority to Chinese Patent Application No. 2023114939160, filed on November 9, 2023 and entitled "SECONDARY BATTERY AND ELECTRICAL DEVICE," the entire contents of which are incorporated herein by reference.

### TECHNICAL FIELD

This application relates to the field of secondary battery technology, and more particularly, to a secondary battery and an electrical device.

### BACKGROUND

With the development of lithium-ion secondary batteries, their application fields have become increasingly broad, ranging from conventional mobile phone batteries to existing electric vehicles, robotic vacuum cleaners, electronic door locks, Bluetooth headsets, wristbands, and the like, impacting various aspects of our lives. However, along with their widespread use, some shortcomings have been exposed. In cold winters, especially in northern cities, the endurance power of electric vehicles is significantly reduced, leading to relatively poor user experience. Mobile phones or wristbands may automatically shut down for protection in low-temperature environments. These issues arise due to the poor low-temperature performance of lithium-ion batteries, particularly their low-temperature discharge rate performance. To meet market demands, there is a need to develop lithium-ion batteries with good low-temperature rate performance, which requires improvements in negative electrode active materials. The low-temperature discharge rate performance is typically improved by reducing particle size of existing negative electrode active materials of lithium-ion batteries, by coating, and by other means, but these methods involve complex processing of the negative electrode active materials.

### SUMMARY

In view of this, this application provides a secondary battery and an electrical device, which can improve the low-temperature discharge rate performance of the battery.

According to a first aspect of this application, a secondary battery is provided, including a negative electrode plate and an electrolyte, where a negative electrode active material in the negative electrode plate has a crystal plane spacing of d₀₀₂ nm and the negative electrode active material has a crystal plane stacking thickness of Lc nm, satisfying 10×d₀₀₂/Lc < 0.109, and the electrolyte includes fluoroethylene carbonate and lithium difluorophosphate, where based on a mass of the electrolyte, a mass percentage of fluoroethylene carbonate is S1% and a mass percentage of lithium difluorophosphate is S2%, 1.5 ≤ S1 ≤ 5.0, and S1 ≥ 4×d₀₀₂ + 0.8×S2.

In the above technical solution, it is found through studies that when the negative electrode active material has a relatively small d₀₀₂ and a relatively large Lc, the interlayer spacing swelling during lithium intercalation is relatively significant, and the SEI film is prone to cracking, affecting the low-temperature rate performance of the secondary battery. If the rate performance of the battery is improved by increasing the value of d₀₀₂ or reducing the value of Lc, the reaction degree between the negative electrode active material and the electrolyte is affected, leading to changes in the formation of the SEI film on the surface of the negative electrode active material, which impacts the film formation stability, thereby affecting the intercalation or deintercalation of active ions in another dimension and consequently affecting the rate performance of the secondary battery. Therefore, in this application, the negative electrode active material satisfies 10×d₀₀₂/Lc < 0.109, the mass percentage of fluoroethylene carbonate is between 1.5% and 5.0%, and an appropriate amount of lithium difluorophosphate is added (S1 ≥ 4×d₀₀₂ + 0.8×S2), which can promote film formation on both the positive and negative electrodes with relatively high film formation stability, thereby mitigating SEI film cracking issues and improving the low-temperature discharge rate performance of the secondary battery.

In some embodiments, 10×d₀₀₂/Lc ≤ 0.103, which can further improve the film formation density and stability on the surface of the negative electrode active material, further improving the low-temperature discharge rate performance of the secondary battery.

In some embodiments, 0.1 ≤ S2 ≤ 1. The addition amount of lithium difluorophosphate is more reasonable, enabling stable film formation on the negative electrode in coordination with fluoroethylene carbonate during film formation on the positive electrode, further enhancing the film formation stability on the surface of the negative electrode active material and further improving the low-temperature discharge rate performance of the secondary battery. Optionally, 0.2 ≤ S2 ≤ 1.

In some embodiments, 1.5 ≤ S1 ≤ 3.0. When the addition amount of fluoroethylene carbonate is within this range, the stability of the film formed on the surface of the negative electrode active material is higher, further improving the film formation density and stability, thereby further improving the low-temperature discharge rate performance. Optionally, 1.7 ≤ S1 ≤ 3.

In some embodiments, 0.330 ≤ d₀₀₂ ≤ 0.340. The crystal plane spacing is more reasonable, and with the addition amounts of fluoroethylene carbonate and lithium difluorophosphate, allows for easy lithium ion intercalation or deintercalation on the surface of the negative electrode active material and higher film formation stability on the surface of the negative electrode active material, further improving the low-temperature discharge rate performance. Optionally, 0.336 ≤ d₀₀₂ ≤ 0.338.

In some embodiments, 23 ≤ Lc ≤ 35. The grain size is more reasonable, and with the addition amounts of fluoroethylene carbonate and lithium difluorophosphate, allows for better film formation thickness and film formation stability on the surface of the negative electrode active material, further improving the low-temperature discharge rate performance. Optionally, 25 ≤ Lc ≤ 32.

In some embodiments, the negative electrode active material satisfies: a true density of the negative electrode active material is R g/cm³, a specific capacity of the negative electrode active material is Cap mAh/g, and 8.0 ≤ (R/2.26)×372 - Cap ≤ 31. Changes in the grain size and crystal plane spacing of the negative electrode active material affect the changes in the true density and specific capacity of the negative electrode active material. A smaller d₀₀₂/Lc results in a larger grain size of the surface negative electrode active material, affecting film formation performance. Under the condition of d₀₀₂/Lc < 0.09, controlling the negative electrode active material to satisfy 8.0 ≤ (R/2.26)×372 - Cap ≤ 31 allows for more lithium intercalation or deintercalation sites of the negative electrode active material and higher structural stability of the negative electrode active material, reducing microcracks generated in the negative electrode active material particles during repeated lithium intercalation or deintercalation, thereby further improving the low-temperature discharge rate performance of the secondary battery. Optionally, 15 ≤ (R/2.26)×372 - Cap ≤ 28.

In some embodiments, the negative electrode active material satisfies: 0.5 ≤ (Dᵥ90 - Dᵥ10)/Dᵥ50 ≤ 1.8. The particle size distribution of the negative electrode active material is relatively reasonable, enabling good particle size compatibility of the negative electrode active material and relatively favorable particle morphology, which is beneficial to film formation, thereby further improving the low-temperature discharge rate performance of the secondary battery. Optionally, 1 ≤ (Dᵥ90 - Dᵥ10)/Dᵥ50 ≤ 1.8; and further optionally, 1.1 ≤ (Dᵥ90 - Dᵥ10)/Dᵥ50 ≤ 1.6.

In some embodiments, an intensity ratio Id/Ig of D peak to G peak in a Raman spectrum of the negative electrode active material satisfies: 0.2 ≤ Id/Ig ≤ 0.8, where Id represents the characteristic peak intensity of the Raman spectrum at 1300 cm⁻¹ to 1400 cm⁻¹, and Ig represents the characteristic peak intensity of the Raman spectrum at 1525 cm⁻¹ to 1625 cm⁻¹. The value of d₀₀₂/Lc of the negative electrode active material is related to the amount of additives in the electrolyte and the defect degree of the negative electrode active material. As the particle defect degree Id/Ig increases, film formation consumption increases, necessitating an increase in the amount of electrolyte additives. Therefore, when the value of d₀₀₂/Lc and the amount of electrolyte additives are within some certain ranges, controlling 0.2 ≤ Id/Ig ≤ 0.8 reduces the surface defect degree of the negative electrode active material, thereby further improving the low-temperature discharge rate performance of the secondary battery. Optionally, 0.2 ≤ Id/Ig ≤ 0.5.

In some embodiments, a compacted density of the negative electrode plate satisfies 1.5 g/cm³ ≤ PD ≤ 1.80 g/cm³. With the constraints of 10×d₀₀₂/Lc and electrolyte additives, a compacted density 1.5 g/cm³ ≤ PD ≤ 1.75 g/cm³ of the negative electrode plate facilitates lithium ion diffusion, thereby further improving the low-temperature discharge rate performance of the secondary battery. Optionally, 1.55 g/cm³ ≤ PD ≤ 1.78 g/cm³.

In some embodiments, the negative electrode plate satisfies 10 ≤ OI value ≤ 26. The value of d₀₀₂ of the negative electrode active material affects the OI value of the electrode plate; a smaller d₀₀₂ results in a larger OI value. With the constraints of 10×d₀₀₂/Lc and electrolyte additives, the negative electrode plate satisfying 10 ≤ OI value ≤ 26 enables lithium ions to intercalate or deintercalate in various directions (facilitating lithium ion intercalation or deintercalation), further improving the low-temperature discharge rate performance of the secondary battery. Optionally, the negative electrode plate satisfies 12 ≤ OI value ≤ 18.

In some embodiments, the negative electrode active material includes at least one of natural graphite or artificial graphite.

According to a second aspect of this application, an electrical device is provided, including the secondary battery provided in the first aspect.

This application provides a secondary battery including a negative electrode plate and an electrolyte, where a negative electrode active material in the negative electrode plate has a crystal plane spacing of d₀₀₂ nm and a crystal plane stacking thickness of Lc nm, satisfying 10×d₀₀₂/Lc < 0.109, and the electrolyte includes fluoroethylene carbonate and lithium difluorophosphate, where based on a mass of the electrolyte, a mass percentage of fluoroethylene carbonate is S1% and a mass percentage of lithium difluorophosphate is S2%, with the mass percentage of fluoroethylene carbonate being 1.5% to 5.0%, and S1 ≥ 4×d₀₀₂ + 0.8×S2, which can improve the low-temperature discharge rate performance of the secondary battery.

### BRIEF DESCRIPTION OF DRAWINGS

To more clearly illustrate the technical solutions of some embodiments of this application, the drawings required for use in these embodiments will be briefly described below. It should be understood that the following drawings only show some embodiments of this application and should not be regarded as limiting the scope. For those skilled in the art, other related drawings can be obtained based on these drawings without creative effort.

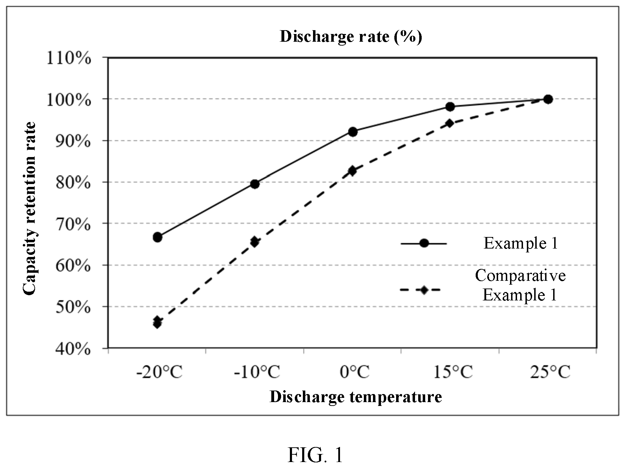

FIG. 1 is a rate performance graph of lithium-ion batteries in Example 1-1 and Comparative Example 1-1 of this application.

### DETAILED DESCRIPTION

This application provides a secondary battery including a negative electrode plate and an electrolyte, where a negative electrode active material in the negative electrode plate has a crystal plane spacing of d₀₀₂ nm and a crystal plane stacking thickness of Lc nm, satisfying 10×d₀₀₂/Lc < 0.109, and the electrolyte includes fluoroethylene carbonate and lithium difluorophosphate, where based on a mass of the electrolyte, a mass percentage of fluoroethylene carbonate is S1% and a mass percentage of lithium difluorophosphate is S2%, 1.5 ≤ S1 ≤ 5.0, and S1 ≥ 4×d₀₀₂ + 0.8×S2.

The negative electrode plate includes a negative electrode current collector and a negative electrode active material layer located on one or both surfaces of the negative electrode current collector. The "surface" here may refer to the entire region of the negative electrode current collector or a partial region of the negative electrode current collector, with no particular limitation in this application, as long as the purpose of this application can be achieved. The negative electrode active material is obtained in the following steps: disassembling the secondary battery, scraping off the negative electrode active material layer from the obtained negative electrode plate, and calcining it in an air atmosphere at a temperature of 400°C, and the resulting powder material is the negative electrode active material.

The negative electrode active material has a crystal plane spacing of d₀₀₂ nm, the negative electrode active material has a crystal plane stacking thickness of Lc nm, and the crystal plane spacing and the crystal plane stacking thickness can be detected by XRD and then calculated.

When the negative electrode active material has a relatively small d₀₀₂ and a relatively large Lc, the interlayer spacing swelling during lithium intercalation is relatively significant, and the SEI film is prone to cracking, affecting the low-temperature rate performance of the secondary battery. If the rate performance of the battery is improved by increasing the value of d₀₀₂ or reducing the value of Lc, the reaction degree between the negative electrode active material and the electrolyte is affected, leading to changes in the formation of the SEI film on the surface of the negative electrode active material, which impacts the film formation stability, thereby affecting the intercalation or deintercalation of active ions in another dimension and consequently affecting the rate performance of the secondary battery. Therefore, in this application, the negative electrode active material satisfies 10×d₀₀₂/Lc < 0.109, the mass percentage of fluoroethylene carbonate is between 1.5% and 5.0%, and an appropriate amount of lithium difluorophosphate is added (S1 ≥ 4×d₀₀₂ + 0.8×S2), which can promote film formation on both the positive and negative electrodes with relatively high film formation stability, thereby mitigating SEI film cracking issues and improving the low-temperature discharge rate performance of the secondary battery.

In some embodiments, 10×d₀₀₂/Lc ≤ 0.103, which can further improve the film formation density and stability on the surface of the negative electrode active material, further improving the low-temperature discharge rate performance of the secondary battery.

In some embodiments, 10×d₀₀₂/Lc < 0.109, the electrolyte includes fluoroethylene carbonate and lithium difluorophosphate, and based on the mass of the electrolyte, a mass percentage of fluoroethylene carbonate is S1% and a mass percentage of lithium difluorophosphate is S2%, 1.5 ≤ S1 ≤ 5.0, S1 ≥ 4×d₀₀₂ + 0.8×S2, and 0.1 ≤ S2 ≤ 1. The addition amount of lithium difluorophosphate is more reasonable, enabling stable film formation on the negative electrode in coordination with fluoroethylene carbonate during film formation on the positive electrode, further enhancing the film formation stability on the surface of the negative electrode active material and further improving the low-temperature discharge rate performance of the secondary battery.

For example, the mass percentage of lithium difluorophosphate is 0.1%, 0.2%, 0.3%, 0.4%, 0.5%, 0.6%, 0.7%, 0.8%, 0.9%, 1%, or a value within a range formed by any two of these values. Optionally, the mass percentage of lithium difluorophosphate is 0.2% to 1%.

In some embodiments, 10×d₀₀₂/Lc < 0.109, and based on the mass of the electrolyte, a mass percentage of fluoroethylene carbonate is S1% and a mass percentage of lithium difluorophosphate is S2%, 1.5 ≤ S1 ≤ 3.0, and S1 ≥ 4×d₀₀₂ + 0.8×S2. When the addition amount of fluoroethylene carbonate is within this range, the stability of the film formed on the surface of the negative electrode active material is higher, further improving the film formation density and stability, thereby further improving the low-temperature discharge rate performance.

For example, the mass percentage of fluoroethylene carbonate is 1.5%, 1.8%, 2.0%, 2.2%, 2.5%, 2.8%, 3.0%, or a value within a range formed by any two of these values. Optionally, the mass percentage of fluoroethylene carbonate is 1.7% to 3%. In other embodiments, the mass percentage of fluoroethylene carbonate may also be 3.5%, 4.0%, 4.5%, 5.0%, or a value within a range formed by any two of these values.

In some embodiments, 10×d₀₀₂/Lc < 0.109, the electrolyte includes fluoroethylene carbonate with a mass percentage of S1% and lithium difluorophosphate with a mass percentage of S2%, 1.5 ≤ S1 ≤ 5.0, S1 ≥ 4×d₀₀₂ + 0.8×S2, and 0.330 ≤ d₀₀₂ ≤ 0.340. The crystal plane spacing is more reasonable, and with the addition amounts of fluoroethylene carbonate and lithium difluorophosphate, allows for easy lithium ion intercalation or deintercalation on the surface of the negative electrode active material and higher film formation stability on the surface of the negative electrode active material, further improving the low-temperature discharge rate performance.

For example, the crystal plane spacing (d₀₀₂ nm) of the negative electrode active material is 0.330 nm, 0.331 nm, 0.332 nm, 0.333 nm, 0.334 nm, 0.335 nm, 0.336 nm, 0.337 nm, 0.338 nm, 0.339 nm, 0.340 nm, or a value within a range formed by any two of these values. Optionally, the crystal plane spacing of the negative electrode active material is 0.336 nm to 0.338 nm.

In some embodiments, 10×d₀₀₂/Lc < 0.109, the electrolyte includes fluoroethylene carbonate with a mass percentage of S1% and lithium difluorophosphate with a mass percentage of S2%, 1.5 ≤ S1 ≤ 5.0, S1 ≥ 4×d₀₀₂ + 0.8×S2, and 23 ≤ Lc ≤ 35. The grain size is more reasonable, and with the addition amounts of fluoroethylene carbonate and lithium difluorophosphate, allows for better film formation thickness and film formation stability on the surface of the negative electrode active material, further improving the low-temperature discharge rate performance.

For example, the crystal plane stacking thickness (Lc nm) of the negative electrode active material is 23 nm, 24 nm, 25 nm, 26 nm, 27 nm, 28 nm, 29 nm, 30 nm, 30.5 nm, 31 nm, 31.5 nm, 32 nm, 32.5 nm, 33 nm, 33.5 nm, 34 nm, 34.5 nm, 35 nm, or a value within a range formed by any two of these values; and optionally, 25 ≤ Lc ≤ 32.

In this application, the mass percentage of each component in the electrolyte is typically controlled during the preparation of the electrolyte. After the battery undergoes charge-discharge cycles, the components in the electrolyte may undergo slight changes but remain within the aforementioned ranges. The mass percentage of each component in the electrolyte of this application may also refer to the mass percentage of the electrolyte in a battery disassembled after charge-discharge cycles. The detection method may be: discharging the battery, placing it in a drying oven after discharge, cutting off the tabs and packaging bag, and then placing it in a centrifuge for centrifugal operation to extract the electrolyte in the battery. The extracted electrolyte is analyzed using a gas chromatography-mass spectrometry instrument to determine the components in the electrolyte and their mass percentages, the mass percentage of each component being calculated based on the mass of the electrolyte.

In this application, the electrolyte may also include other components. The electrolyte lithium salt also includes lithium salt and a non-aqueous solvent, where the lithium salt may include at least one of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, Li₂SiF₆, lithium bis(oxalato)borate (LiBOB), or lithium difluoro(oxalato)borate. This application does not particularly limit the mass percentage of the lithium salt in the electrolyte, as long as the purpose of this application can be achieved. For example, based on the mass of the electrolyte, the mass percentage of the lithium salt is 10% to 15%. The electrolyte may also include a sodium salt and a non-aqueous solvent, or the electrolyte may include a lithium salt and a non-aqueous solvent; where the sodium salt may include at least one of NaPF₆, NaClO₄, NaBCl₄, NaSO₃CF₃, or Na(CH₃)C₆H₄SO₃. This application does not particularly limit the concentration of the sodium salt in the electrolyte, as long as the purpose of this application can be achieved. For example, based on the mass of the electrolyte, the mass percentage of the sodium salt is 2% to 15%.

This application does not particularly limit the aforementioned non-aqueous solvent, as long as the purpose of this application can be achieved, for example, it may include but is not limited to at least one of carbonate compounds, carboxylate compounds, ether compounds, or other organic solvents. The carbonate compounds may include but are not limited to at least one of linear carbonate compounds, cyclic carbonate compounds, or fluorinated carbonate compounds, where the linear carbonate compounds may include but are not limited to at least one of dimethyl carbonate (DMC), diethyl carbonate (DEC), dipropyl carbonate (DPC), methyl propyl carbonate (MPC), ethyl propyl carbonate (EPC), or ethyl methyl carbonate (MEC); the cyclic carbonate may include but are not limited to at least one of ethylene carbonate (EC), propylene carbonate (PC), butylene carbonate (BC), or vinyl ethylene carbonate (VEC); and the fluorinated carbonate compounds may include but are not limited to at least one of 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, or trifluoromethyl ethylene carbonate. The carboxylate compounds may include but are not limited to at least one of methyl formate, methyl acetate, ethyl acetate, n-propyl acetate, tert-butyl acetate, methyl propionate, ethyl propionate, propyl propionate, γ-butyrolactone, caprolactone, valerolactone, or hexanolide. The ether compounds may include but are not limited to at least one of dibutyl ether, tetraglyme, diglyme, 1,2-dimethoxyethane, 1,2-diethoxyethane, 1-ethoxy-1-methoxyethane, 2-methyltetrahydrofuran, or tetrahydrofuran. The other organic solvents may include but are not limited to at least one of dimethyl sulfoxide, 1,2-dioxolane, sulfolane, methyl sulfolane, 1,3-dimethyl-2-imidazolidinone, N-methyl-2-pyrrolidone, dimethylformamide, acetonitrile, trimethyl phosphate, triethyl phosphate, or trioctyl phosphate.

In some embodiments, the negative electrode active material satisfies: a true density of the negative electrode active material is R g/cm³, a specific capacity of the negative electrode active material is Cap mAh/g, and 8.0 ≤ (R/2.26)×372 - Cap ≤ 31. Changes in the grain size and crystal plane spacing of the negative electrode active material affect the changes in the true density and specific capacity of the negative electrode active material. A smaller d₀₀₂/Lc results in a larger grain size of the surface negative electrode active material, affecting film formation performance. Under the condition of d₀₀₂/Lc < 0.09, controlling the negative electrode active material to satisfy 8.0 ≤ (R/2.26)×372 - Cap ≤ 31 allows for more lithium intercalation or deintercalation sites of the negative electrode active material and higher structural stability of the negative electrode active material, reducing microcracks generated in the negative electrode active material particles during repeated lithium intercalation or deintercalation, thereby further improving the low-temperature discharge rate performance of the secondary battery.

In the formula (R/2.26)×372 - Cap, the unit of the true density of the negative electrode active material is g/cm³, and the unit of the specific capacity of the negative electrode active material is mAh/g. In the calculation of this formula, only the numerical values with these units are considered, and the units themselves are disregarded.

For example, the value of (R/2.26)×372 - Cap is 8, 9, 10, 11, 12, 13, 14, 15, 16, 17, 18, 19, 20, 21, 22, 23, 24, 25, 26, 27, 28, 29, 30, 31, 32, or a value within a range formed by any two of these values. Optionally, 15 ≤ (R/2.26)×372 - Cap ≤ 28.

Optionally, in this application, 10×d₀₀₂/Lc < 0.109, the true density of the negative electrode active material is in the range of 2.00 g/cm³ to 2.26 g/cm³, and the specific capacity of the negative electrode active material is in the range of 330 mAh/g to 350 mAh/g. For example, the true density of the negative electrode active material is 2.00 g/cm³, 2.02 g/cm³, 2.05 g/cm³, 2.10 g/cm³, 2.13 g/cm³, 2.15 g/cm³, 2.18 g/cm³, 2.20 g/cm³, 2.23 g/cm³, 2.25 g/cm³, 2.26 g/cm³, or a value within a range formed by any two of these values. The specific capacity of the negative electrode active material is 330 mAh/g, 335 mAh/g, 340 mAh/g, 345 mAh/g, 350 mAh/g, or a value within a range formed by any two of these values.

In some embodiments, the negative electrode active material satisfies: 0.5 ≤ (Dᵥ90 - Dᵥ10)/Dᵥ50 ≤ 2.0. In the volume-based particle size distribution of the negative electrode active material, the particle size reaching 10% cumulative volume from the small particle size side is Dᵥ10, the particle size reaching 50% cumulative volume is Dᵥ50, and the particle size reaching 90% cumulative volume is Dᵥ90. The particle size distribution of the negative electrode active material is relatively reasonable, enabling good particle size compatibility of the negative electrode active material and relatively favorable particle morphology, which is beneficial to film formation, thereby further improving the low-temperature discharge rate performance of the secondary battery.

For example, the value of (Dᵥ90 - Dᵥ10)/Dᵥ50 is 0.5, 0.6, 0.7, 0.8, 0.9, 1.0, 1.1, 1.2, 1.3, 1.4, 1.5, 1.6, 1.7, 1.8, 1.9, 2.0, or a value within a range formed by any two of these values. Optionally, 1 ≤ (Dᵥ90 - Dᵥ10)/Dᵥ50 ≤ 1.8; and further optionally, 1.1 ≤ (Dᵥ90 - Dᵥ10)/Dᵥ50 ≤ 1.6.

Optionally, the negative electrode active material satisfies: Dᵥ10 ranges from 3 µm to 7 µm; Dᵥ50 ranges from 10 µm to 20 µm; Dᵥ90 ranges from 15 µm to 40 µm; and Dᵥ90 > Dᵥ50 > Dᵥ10. For example, in the negative electrode active material, Dᵥ10 is 3 µm, 4 µm, 5 µm, 6 µm, 7 µm, or a value within a range formed by any two of these values; Dᵥ50 is 10 µm, 11 µm, 12 µm, 13 µm, 14 µm, 15 µm, 16 µm, 17 µm, 18 µm, 19 µm, 20 µm, or a value within a range formed by any two of these values; and Dᵥ90 is 15 µm, 16 µm, 17 µm, 18 µm, 19 µm, 20 µm, 21 µm, 22 µm, 23 µm, 24 µm, 25 µm, 26 µm, 27 µm, 28 µm, 29 µm, 30 µm, 31 µm, 32 µm, 33 µm, 34 µm, 35 µm, 36 µm, 37 µm, 38 µm, 39 µm, 40 µm, or a value within a range formed by any two of these values.

In some embodiments, an intensity ratio Id/Ig of D peak to G peak in a Raman spectrum of the negative electrode active material satisfies: 0.2 ≤ Id/Ig ≤ 0.8, where Id represents the characteristic peak intensity of the Raman spectrum at 1300 cm⁻¹ to 1400 cm⁻¹, and Ig represents the characteristic peak intensity of the Raman spectrum at 1525 cm⁻¹ to 1625 cm⁻¹. The value of d₀₀₂/Lc of the negative electrode active material is related to the amount of additives in the electrolyte and the defect degree of the negative electrode active material. As the particle defect degree Id/Ig increases, film formation consumption increases, necessitating an increase in the amount of electrolyte additives. Therefore, when the value of d₀₀₂/Lc and the amount of electrolyte additives are within some certain ranges, controlling 0.2 ≤ Id/Ig ≤ 0.8 reduces the surface defect degree of the negative electrode active material, thereby further improving the low-temperature discharge rate performance of the secondary battery.

For example, the intensity ratio Id/Ig of D peak to G peak in a Raman spectrum of the negative electrode active material is 0.2, 0.3, 0.4, 0.5, 0.55, 0.6, 0.7, 0.8, or a value within a range formed by any two of these values. Optionally, 0.2 ≤ Id/Ig ≤ 0.5.

In some embodiments, the negative electrode active material includes at least one of natural graphite or artificial graphite.

In some embodiments, the negative electrode active material includes artificial graphite, and the preparation method of the artificial graphite includes: (1) graphitizable tar coke (with a mass percentage of quinoline insoluble of the tar coke being greater than or equal to 6% and smaller than or equal to 12%, a mass percentage of volatilization matter of the tar coke being smaller than 12%, and a sulfur mass percentage being smaller than 2%) is selected as the raw material for artificial graphite, the tar coke is crushed to Dᵥ50 of 6 µm to 12 µm, and then pre-carbonization treatment is performed at a temperature of 900°C to 1200°C for 5 h or more than 5 h. (2) After pre-carbonization, it is mixed with pitch (the pitch addition amount is 2% to 6% of the tar coke mass, with a softening point of 180°C to 240°C) for granulation, with a granulation time of 1 h to 3 h and a granulation temperature of 300°C to 500°C. (3) After granulation, they are mixed well and graphitization treatment is performed, where the graphitization process is to control the graphitization temperature and time based on the percentage of the quinoline insoluble in the raw tar coke. When the percentage of the quinoline insoluble is 6% to 9%, the tar coke is relatively easy to graphitize, and a slightly lower graphitization temperature and shorter holding time can be selected, with the graphitization temperature controlled at 2500°C to 2800°C and the holding time controlled at 24 h to 72 h. When the percentage of the quinoline insoluble is greater than 9%, the quinoline insoluble inhibits the graphitization transformation of the coke, making graphitization difficult, so the graphitization temperature is increased to 2800°C to 3100°C, and the holding time is controlled at 30 h to 96 h. (4) After graphitization, the particles are shaped and classified to obtain graphite, with a shaping time of 3 h to 8 h and a classification yield of 70% to 90%.

In some embodiments, a compacted density of the negative electrode plate satisfies 1.5 g/cm³ ≤ PD ≤ 1.8 g/cm³. With the constraints of 10×d₀₀₂/Lc and electrolyte additives, a compacted density 1.5 g/cm³ ≤ PD ≤ 1.75 g/cm³ of the negative electrode plate facilitates lithium ion diffusion, thereby further improving the low-temperature discharge rate performance of the secondary battery.

For example, the compacted density of the negative electrode plate is 1.50 g/cm³, 1.55 g/cm³, 1.60 g/cm³, 1.65 g/cm³, 1.70 g/cm³, 1.75 g/cm³, or a value within a range formed by any two of these values. In other embodiments, the compacted density of the negative electrode plate may also be 1.20 g/cm³, 1.25 g/cm³, 1.30 g/cm³, 1.35 g/cm³, 1.40 g/cm³, 1.45 g/cm³, 1.80 g/cm³, or a value within a range formed by any two of these values.

In some embodiments, the negative electrode plate satisfies 10 ≤ OI value ≤ 26; a portion of the negative electrode plate (including the negative electrode current collector and the negative electrode active material layer) is cut out, and the XRD data of the negative electrode plate is tested with reference to JB/T 4220-2011 to obtain the peak area of the 004 peak and the peak area of the 110 peak. The OI value of the negative electrode plate = peak area of the 004 peak/peak area of the 110 peak. The peak area of the 004 peak is the characteristic peak area of the XRD diffraction pattern line at 53° to 57°, and the peak area of the 110 peak is the characteristic peak area of the XRD diffraction pattern line at 75° to 79°.

The value of d₀₀₂ of the negative electrode active material affects the OI value of the electrode plate; a smaller d₀₀₂ results in a larger OI value. With the constraints of 10×d₀₀₂/Lc and electrolyte additives, the negative electrode plate satisfying 10 ≤ OI value ≤ 26 enables lithium ions to intercalate or deintercalate in various directions (facilitating lithium ion intercalation or deintercalation), further improving the low-temperature discharge rate performance of the secondary battery.

For example, the OI value of the negative electrode plate is 10, 11, 12, 12.5, 13, 13.5, 14, 14.5, 15, 15.5, 16, 16.5, 17, 17.5, 18, or a value within a range formed by any two of these values. Optionally, the negative electrode plate satisfies 12 ≤ OI value ≤ 18. In other embodiments, the OI value of the negative electrode plate may also be 18.5, 19, 20, 21, 22, 23, 24, 25, 26, or a value within a range formed by any two of these values.

The preparation method of the negative electrode plate includes: mixing the negative electrode active material (which may be artificial graphite), an additive (for example, conductive agent), a binder (for example, styrene-butadiene rubber), and a thickener (for example, sodium carboxymethyl cellulose) in a certain ratio, where the mass percentage of the additive is 1% to 3%, the mass percentage of the negative electrode active material is 90% to 97%, the mass percentage of the binder styrene-butadiene rubber is 1.2% to 2.2%, and the mass percentage of the thickener sodium carboxymethyl cellulose is 0.5% to 1.5%, with the mass percentages of the four components summing to 100%. The mixture is thoroughly stirred and mixed in an appropriate amount of water solvent to form a uniform negative electrode slurry, and the slurry is applied to the negative electrode current collector, dried, and cold-pressed to obtain the negative electrode plate.

The negative electrode active material layer on the negative electrode plate is scraped off and calcined in an air atmosphere at a temperature of 400°C, and the resulting powder material is the negative electrode active material.

This application does not particularly limit the negative electrode current collector, as long as the purpose of this application can be achieved. For example, the negative electrode current collector may include aluminum foil, copper foil, copper alloy foil, nickel foil, stainless steel foil, titanium foil, foamed nickel, foamed copper, or a polymer substrate coated with a conductive metal; where the conductive metal includes but is not limited to copper, nickel, or titanium, and the material of the polymer substrate includes but is not limited to at least one of polyethylene, polypropylene, ethylene-propylene copolymer, polyethylene terephthalate, polyethylene naphthalate, or poly(p-phenylene terephthalamide).

In this application, there is no particular limitation on the thicknesses of the negative electrode current collector and the negative electrode active material layer, as long as the purpose of this application can be achieved. For example, the thickness of the negative electrode current collector is 4 µm to 12 µm, and the thickness of the negative electrode active material layer on a single surface of the negative electrode current collector is 30 µm to 130 µm.

In some embodiments, this application does not particularly limit the above binder, as long as the purpose of this application can be achieved. For example, the binder may include but is not limited to at least one of polyallyl alcohol, sodium polyacrylate, potassium polyacrylate, lithium polyacrylate, polyimide, polyamideimide, hydroxypropyl cellulose, diacetyl cellulose, polyvinyl chloride, carboxylated polyvinyl chloride, polyvinylpyrrolidone, polyethylene, polypropylene, epoxy resin, nylon, styrene-butadiene rubber (SBR), polyvinyl alcohol (PVA), polyvinylidene fluoride (PVDF), polytetrafluoroethylene (PTFE), polyvinyl butyral, water-based acrylic resin, carboxymethyl cellulose (CMC), or sodium carboxymethyl cellulose (CMC-Na).

In some embodiments, the negative electrode plate can be prepared according to conventional methods in the art. For example, the graphite, conductive agent, binder, and thickener described above are dispersed in a solvent, and the solvent may be N-methylpyrrolidone (NMP) or deionized water, to form a uniform negative electrode slurry. The negative electrode slurry is applied to the negative electrode current collector, and subjected to processes such as drying and cold pressing to obtain the negative electrode plate.

The conductive agent may include but is not limited to carbon materials, metals, or conductive polymers; the carbon materials may include at least one of conductive carbon black (Super P), carbon nanotubes (CNTs), carbon nanofibers, carbon dots, or graphene; the metals may include metal powders or metal fibers such as copper, iron, or aluminum; and the conductive polymers may include at least one of polythiophene, polypyrrole, polyaniline, poly(p-phenylene), or poly(p-phenylene vinylene).

In some embodiments, the positive electrode plate in this application includes a positive electrode current collector and a positive electrode active material layer disposed on at least one surface of the positive electrode current collector, where the positive electrode active material layer includes a positive electrode active material; the positive electrode current collector may be aluminum foil, foamed aluminum, aluminum composite current collector (with a polymer support layer in the middle and aluminum metal layers on both surfaces of the support layer), nickel foil, foamed nickel, or the like; and the positive electrode active material may be lithium nickel cobalt manganese oxide, lithium nickel cobalt aluminum oxide, lithium cobalt oxide, lithium iron phosphate, lithium manganese oxide, Prussian white, Prussian blue, or the like.

In some embodiments, the separator in this application may be made of various materials, such as PP (polypropylene) film, PE (polyethylene) film, or PP/PE composite film.

The negative electrode plate, positive electrode plate, electrolyte, and separator are combined to form a secondary battery. This secondary battery exhibits good cycling performance and low-temperature lithium precipitation performance.

In some embodiments, the secondary battery may be a lithium-ion secondary battery or a sodium-ion secondary battery.

This application also provides an electrical device including the above secondary battery. The electrical device provided by this application includes the above secondary battery with high energy density and cycling performance, and thus the electrical device has a relatively long service life.

In some embodiments, the electrical device may include but is not limited to mobile phones, laptops, earphones, video recorders, calculators, vehicles, ships, spacecraft, power tools, electric toys, and the like. The embodiments of this application do not impose specific limitations on the aforementioned electrical device.

To make the purposes, technical solutions, and advantages of some embodiments of this application clearer, the technical solutions in these embodiments of this application will be described clearly and completely below. For examples where specific conditions are not specified, they are carried out under conventional conditions or conditions recommended by the manufacturer. Reagents or instruments used without specifying the manufacturer are conventional products commercially available.

### Example 1-1

### (1) Preparation of artificial graphite

Graphitizable tar coke (with a mass percentage of quinoline insoluble of the tar coke being 8.5%, a mass percentage of volatilization matter being 9%, and a sulfur mass percentage being 1.3%) was crushed to Dᵥ50 of 8.0 µm, followed by pre-carbonization treatment at a temperature of 1000°C for 7 h. After treatment, it was mixed with pitch (a pitch addition amount was 3% of the tar coke mass, with a softening point of 210°C) and granulated at a temperature of 400°C for 2 h. After granulation, graphitization treatment was performed at a temperature of 2800°C for 70 h. Then, shaping was performed for 4 h with a classification yield of 85% to obtain artificial graphite.

### (2) Preparation of negative electrode plate

Artificial graphite as a negative electrode active material, conductive carbon black (Super P) as an additive, styrene-butadiene rubber as a binder, and sodium carboxymethyl cellulose as a thickener were mixed in a certain ratio, where a mass percentage of the negative electrode active material was 95%, a mass percentage of the additive was 1.5%, a mass percentage of the binder styrene-butadiene rubber was 2.0%, and a mass percentage of the thickener sodium carboxymethyl cellulose was 1.5%. The mixture was thoroughly stirred and mixed in an appropriate amount of deionized water solvent to prepare a negative electrode slurry with a solid content of 40wt%, and stirred well. The negative electrode slurry was uniformly applied to both surfaces of a 6-µm-thick negative electrode current collector copper foil, and the copper foil was dried at 85°C for 4 h to obtain a negative electrode plate with a thickness of 50 µm for the negative electrode active material layer on each surface of the current collector. After cold pressing, cutting, and slitting, it was dried under vacuum at 120°C for 12 h to obtain a negative electrode plate with specifications of 76.6 mm × 875 mm.

### (3) Preparation of positive electrode plate

Lithium iron phosphate, acetylene black as a conductive agent, and polyvinylidene fluoride as a binder were mixed in a certain ratio, where a mass percentage of lithium iron phosphate was 96.3%, a mass percentage of the conductive agent was 2.2%, and a mass percentage of polyvinylidene fluoride was 1.5%. N-methylpyrrolidone (NMP) was added as a solvent and stirred well to prepare a positive electrode slurry with a solid content of 72wt%. The positive electrode slurry was uniformly applied to both surfaces of a 13-µm-thick positive electrode current collector aluminum foil, and dried at 85°C to obtain a positive electrode plate with a thickness of 80 µm for the negative electrode active material layer on each surface of the current collector. After cold pressing, cutting, and slitting, it was dried under vacuum at 85°C for 4 h to obtain a positive electrode plate with specifications of 74 mm × 867 mm.

### (4) Preparation of electrolyte

In a dry argon atmosphere glovebox, ethylene carbonate (EC), propylene carbonate (PC), ethyl methyl carbonate (EMC), and diethyl carbonate (DEC) were mixed in a mass ratio of EC:PC:EMC:DEC = 1:3:3:3, followed by the addition of fluoroethylene carbonate and lithium difluorophosphate, dissolved and thoroughly stirred, and then lithium salt LiPF₆ was added and mixed well to obtain an electrolyte. A mass percentage of LiPF₆ was 11.0%, a mass percentage of fluoroethylene carbonate was 2.4%, and a mass percentage of lithium difluorophosphate was 0.5%, a mass percentage of each component being calculated based on a mass of the electrolyte.

### (5) Preparation of separator

A polyethylene film (provided by Celgard) with a thickness of 8 µm was used as a separator.

### (6) Preparation of lithium-ion battery

The above positive electrode plate, separator, and negative electrode plate were stacked in order, with the separator positioned between the positive electrode plate and negative electrode plate to provide isolation, and then wound to obtain an electrode assembly. After tab welding, the electrode assembly was placed in an aluminum-plastic film packaging bag, dried in a vacuum oven at 80°C for 12 h to remove moisture, injected with the prepared electrolyte, and subjected to processes such as vacuum sealing, standing, formation, degassing, and shaping to obtain a lithium-ion battery.

Example 1-2 to Example 1-13 and Comparative Example 1-1 to Comparative Example 1-6 differed from Example 1-1 in the mass percentage of quinoline insoluble in the tar coke, the graphitization conditions, the addition amount of fluoroethylene carbonate, and the addition amount of lithium difluorophosphate, with specific details provided in Table 1.

The performance of the lithium-ion batteries provided in Example 1-1 to Example 1-13 and Comparative Example 1-1 to Comparative Example 1-6 was tested separately, with results shown in Table 1, and the specific methods were as follows:
(1) The following steps were performed at a -10°C discharge rate (%)
   1. The furnace temperature was adjusted to 25°C and left to stand for 5 minutes.
   2. 0.5C DC to 2.5V.
   3. Rest for 30 minutes.
   4. 0.2C CC to 3.6V and CV to 0.025C.
   5. Rest for 10 minutes.
   6. 1.0C DC to 2.5 V (reference capacity).
   7. Rest for 10 minutes.
   8. 0.2C CC to 3.6 V and CV to 0.025 C.
   9. Rest for 10 minutes.
   10. The furnace temperature was adjusted to -10°C and left to stand for 60 minutes.
   11. 1.0C DC to 2.5 V.
   12. 0.2C CC to 3.6 V and CV to 0.025 C.
   13. Rest for 10 minutes.
   14. 1.0C DC to 2.5 V (-10°C discharge capacity).
   15. The furnace temperature was adjusted to 25°C and left to stand for 60 minutes.
   16. The test was ended.
(2) Parameters of negative electrode plate
   The battery was discharged and placed in a drying oven after discharge, the tabs and packaging bag were cut off, and the negative electrode plate was taken.

### (2.1) OI Value

According to the People's Republic of China Machinery Industry Standard JB/T 4220-2011 "Method for Determination of Lattice Parameters of Artificial Graphite," the (004) plane diffraction pattern and the (110) plane diffraction pattern in the X-ray diffraction pattern of the negative electrode active material layer were tested. The test conditions were as follows: X-ray CuKα radiation was used, with CuKα radiation filtered by a filter or monochromator, an operating voltage of the X-ray tube was 30 kV to 35 kV, an operating current was 15 mA to 20 mA, and a scanning speed of a counter was 1/4°/min. When the (004) diffraction pattern was recorded, a scanning range of a diffraction angle 2θ was 53° to 57°, and when the (110) diffraction pattern was recorded, the scanning range of the diffraction angle 2θ was 75° to 79°. A peak area obtained from the (004) plane diffraction pattern was denoted as C004, and a peak area obtained from the (110) plane diffraction pattern was denoted as C110. A ratio of C004/C110 of the negative electrode active material was calculated as the OI value of the negative electrode plate.

### (2.2) Compacted density

Compacted density = mass/volume × 100%. The negative electrode plate was taken, and a small disc with a radius of 1 cm was punched out using a punching machine. The punched disc was double-sided. The double-sided thickness L cm was measured and the small disc mass m g was weighed. Then the small disc was soaked and washed with soapy water to remove the active substance layer, leaving only the clean copper foil disc. The copper foil thickness L1 was measured and the copper foil mass m1 g was weighed. According to the formula: PD = (m - m1)/((3.14 × 12) × (L - L1)), the operation was repeated 5 times and the average value was taken to obtain the compacted density PD of the negative electrode plate.

### (3) Parameters of negative electrode active material

The negative electrode active material layer was scraped off from the disassembled negative electrode plate and calcined in an air atmosphere at a temperature of 400°C for 4 h, and the resulting powder material was the negative electrode active material.

### (3.1) d₀₀₂, Lc testing

The testing method for the diffraction peaks of the (002, 004, 110) crystal planes of the negative electrode active material (hereinafter referred to as "002 peak, 004 peak, 110 peak"): The negative electrode active material was tested using an X-ray powder diffractometer (XRD, model: Bruker D8 ADVANCE), with a Cu Kα target; and voltage and current were 40 kV and 40 mA respectively, a scanning angle range was 5° to 80°, a scanning step size was 0.00836°, and a time per step was 0.3s.

According to Bragg's law, 2 d₀₀₂ sinθ = λ (d₀₀₂ was the crystal plane spacing), and d₀₀₂ = λ/2/sinθ, where λ was a wavelength of a scattered line, θ was the angle of the maximum peak intensity position of the 002 peak, and d₀₀₂ could be calculated.

Lc: The average stacking thickness of graphite microcrystals along the c-axis, Lc = Kλ/α(2θ)/cosα. K = scherrer constant (K = 0.9), α was the full width at half maximum of the 002 peak, λ was the wavelength (0.154056) of the scattered line, and θ was the angle of the maximum peak intensity position of the 002 peak.

### (3.2) True density R g/cm³ testing of negative electrode active material

Referring to the GB/T 24586 true density testing standard, the true density of the negative electrode active material was tested using the gas displacement method, Archimedes' principle (density = mass/volume) driven by gas was applied, and Boyle's law (PV = nRT) under certain conditions with small-molecule inert gas was used to measure the volume of the negative electrode active material, thereby obtaining its true density.

### (3.3) Specific capacity testing

Specific capacity testing could refer to the standard: GB/T 24533-2019. The negative electrode active material was mixed, coated, rolled, punched, and dried to form a negative electrode plate, a lithium sheet was used as the positive electrode, and then they were assembled into a button cell for testing. The specific capacity of the material was calculated based on the capacity of the button cell.

### (3.4) Peak intensity ratio testing

An area of 100 µm × 100 µm on the negative electrode active material layer was selected, and the particles within this area were scanned using a laser micro-confocal Raman spectrometer (Raman, HR Evolution, HORIBA Scientific Division), to obtain the D peak and G peak of all particles in this area range, where: the D peak appeared at 1300 cm⁻¹ to 1400 cm⁻¹; the G peak appeared at 1525 cm⁻¹ to 1625 cm⁻¹. LabSpec software was used to process the data to obtain the peak intensities of the D peak and G peak for each particle, denoted as Id and Ig, respectively. The frequency of Id/Ig with a step size of 0.02 was calculated to obtain a normal distribution graph, and the average value of Id/Ig was calculated, which was the intensity ratio Id/Ig of D peak to G peak of the active material. The laser wavelength of the Raman spectrometer could be in the range of 532 nm to 785 nm.

### (3.5) Particle size distribution Dᵥ10, Dᵥ50, Dᵥ90 testing

The particle size testing method of the negative electrode active material referred to GB/T 19077-2016. The specific process was to weigh 0.8 g of the negative electrode active material sample, mix it with 20 mL of deionized water and a trace amount of dispersant, sonicate for 5 min in an ultrasonic device, and then pour the solution into the Hydro 2000SM sampling system for testing. The testing equipment was the Mastersizer 3000 manufactured by Malvern. During the test, the particle size was measured by measuring the intensity of scattered light as the laser beam passes through the dispersed particle sample. The data was then used to analyze and calculate the particle size distribution of the scattering spectrum. The particle refractive index used in the test was 1.8, and each sample was tested three times, with the average of the three tests taken as the final particle size.

**Table 1**

| Number | Mass percentage of Quinoline insoluble (%) | Graphitization condition | | D₀₀₂ | Lc | 10× d₀₀₂/Lc | Electrolyte | | 4×d₀₀₂ + 0.8×S2 | Battery performance |
|---|---|---|---|---|---|---|---|---|---|---|
| | | Temperature (°C) | Time (h) | | | | Lithium difluorophosphate S2% | Fluoroethylene carbonate S1% | | -10°C discharge rate (%) |
| Example 1-1 | 8.5 | 2800 | 70 | 0.3369 | 31.0836 | 0.108 | 0.5 | 2.4 | 1.75 | 79.8 |
| Example 1-2 | 9.5 | 3050 | 80 | 0.3366 | 32.5523 | 0.103 | 0.4 | 2.1 | 1.67 | 81.2 |
| Example 1-3 | 11 | 3100 | 95 | 0.3367 | 33.8487 | 0.099 | 0.5 | 2.5 | 1.75 | 81.5 |
| Example 1-4 | 9.5 | 3050 | 80 | 0.3366 | 32.5523 | 0.103 | 0.5 | 1.5 | 1.75 | 80.8 |
| Example 1-5 | 9.5 | 3050 | 80 | 0.3366 | 32.5523 | 0.103 | 0.5 | 2 | 1.75 | 81.2 |
| Example 1-6 | 9.5 | 3050 | 80 | 0.3366 | 32.5523 | 0.103 | 0.5 | 3 | 1.75 | 81.6 |
| Example 1-7 | 9.5 | 3050 | 80 | 0.3366 | 32.5523 | 0.103 | 0.5 | 4 | 1.75 | 81.5 |
| Example 1-8 | 9.5 | 3050 | 80 | 0.3366 | 32.5523 | 0.103 | 0.5 | 5 | 1.75 | 81.5 |
| Example 1-9 | 9.5 | 3050 | 80 | 0.3366 | 32.5523 | 0.103 | 0.2 | 2.4 | 1.51 | 81.1 |
| Example 1-10 | 9.5 | 3050 | 80 | 0.3366 | 32.5523 | 0.103 | 0.8 | 2.4 | 1.99 | 81.6 |
| Example 1-11 | 9.5 | 3050 | 80 | 0.3366 | 32.5523 | 0.103 | 1 | 2.4 | 2.15 | 81.7 |
| Example 1-12 | 9.5 | 3050 | 80 | 0.3366 | 32.5523 | 0.103 | 1.2 | 2.4 | 2.31 | 81.6 |
| Example 1-13 | 9.5 | 3050 | 80 | 0.3366 | 32.5523 | 0.103 | 1.5 | 3 | 2.55 | 81.6 |
| Comparative Example 1-1 | 8 | 2800 | 70 | 0.3566 | 33.6576 | 0.106 | 0.3 | 1.2 | 1.67 | 66.0 |
| Comparative Example 1-2 | 8 | 2800 | 70 | 0.3566 | 33.6576 | 0.106 | 1.5 | 1.8 | 2.63 | 65.6 |
| Comparative Example 1-3 | 8 | 2800 | 70 | 0.3566 | 33.6576 | 0.106 | 0.5 | 0.7 | 1.83 | 66.8 |
| Comparative Example 1-4 | 9.5 | 3050 | 80 | 0.3366 | 32.5523 | 0.103 | 1.5 | 5.5 | 2.55 | 66.2 |
| Comparative Example 1-5 | 9.5 | 3050 | 80 | 0.3366 | 32.5523 | 0.103 | 0 | 1.8 | 1.35 | 66.0 |
| Comparative Example 1-6 | 10 | 3000 | 38 | 0.338 | 27.3305 | 0.124 | 0.5 | 2.4 | 1.75 | 66.2 |

In Table 1, the units of d₀₀₂ and Lc are both nm, and in the result of 4×d₀₀₂ + 0.8×S2, only the numerical value of d₀₀₂ is considered, disregarding its unit.

By comparing Examples 1-1 to 1-13 with Comparative Examples 1-1 to 1-6, it can be seen that in the lithium-ion battery of this application, the negative electrode active material has a crystal plane spacing of d₀₀₂ nm and a crystal plane stacking thickness of Lc nm, satisfying 10×d₀₀₂/Lc < 0.109, the electrolyte includes fluoroethylene carbonate with a mass percentage of S1% and lithium difluorophosphate with a mass percentage of S2%, 1.5 ≤ S1 ≤ 5.0, and S1 ≥ 4×d₀₀₂ + 0.8×S2, which can improve the low-temperature discharge rate performance of the secondary battery.

By comparing Example 1-1 with Example 1-13, it can be seen that when 10×d₀₀₂/Lc ≤ 0.103, 1.5 ≤ S1 ≤ 5.0, and S1 ≥ 4×d₀₀₂ + 0.8×S2, the low-temperature discharge rate performance of the secondary battery can be further improved.

By comparing Example 1-4 to Example 1-8, it can be seen that when the value of 10×d₀₀₂/Lc and the mass percentage of lithium difluorophosphate are the same, a mass percentage of fluoroethylene carbonate of 2% to 3% can further improve the low-temperature discharge rate performance of the secondary battery.

By comparing Example 1-9 to Example 1-12, it can be seen that when the value of 10×d₀₀₂/Lc and the mass percentage of fluoroethylene carbonate are the same, a mass percentage of lithium difluorophosphate of 0.2% to 1% can further improve the low-temperature discharge rate performance of the secondary battery.

Example 2-1 to Example 2-5 differed from Example 1-1 in the mass percentage of volatilization matter in the tar coke, the carbonization time, and the carbonization temperature, with specific details provided in Table 2.

The performance was tested according to the aforementioned methods, with results shown in Table 2.

**Table 2**

| Number | Tar coke | Carbonization condition | | Negative electrode active material | | Battery performance | |
|---|---|---|---|---|---|---|---|
| | Mass percentage of Quinoline insoluble (%) | Temperature (°C) | Time (h) | R (g/cm³) | Cap (mAh/g) | (R/2.26)× 372 - Cap | -10°C discharge rate (%) |
| Example 1-1 | 8.5 | 1000 | 7 | 2.244 | 339 | 30.4 | 79.8 |
| Example 2-1 | 8 | 1100 | 5 | 2.245 | 340 | 29.5 | 81.7 |
| Example 2-2 | 8 | 1200 | 7 | 2.24 | 345 | 23.7 | 82.1 |
| Example 2-3 | 9 | 1100 | 6 | 2.242 | 350 | 19 | 82 |
| Example 2-4 | 10 | 1200 | 7 | 2.239 | 345 | 23.5 | 82.5 |
| Example 2-5 | 9 | 1000 | 5 | 2.24 | 340 | 28.7 | 81.9 |

By comparing Example 1-1 with Example 2-1 to Example 2-5, it can be seen that when the negative electrode active material of the battery satisfies 8 ≤ (R/2.26)×372 - Cap ≤ 31, the low-temperature discharge rate performance of the battery can be further improved.

Example 3-1 to Example 3-6 differed from Example 2-4 in the crushed size of the tar coke and the pitch addition amount, with specific details provided in Table 3.

The performance was tested according to the aforementioned methods, with results shown in Table 3.

**Table 3**

| Number | Tar coke crushed size (µm) | Pitch addition amount (%) | Negative electrode active material | | | (Dᵥ90-Dᵥ10)/ Dᵥ50 | Battery performance |
|---|---|---|---|---|---|---|---|
| | | | Dᵥ90 (µm) | Dᵥ10 (µm) | Dᵥ50 (µm) | | -10°C discharge rate (%) |
| Example 2-4 | 8 | 3 | 35.3 | 6.2 | 14.5 | 2.0 | 82.5 |
| Example 3-1 | 6 | 2 | 20 | 4.5 | 11.2 | 1.4 | 83.2 |
| Example 3-2 | 7 | 1 | 18.5 | 3.8 | 10.5 | 1.4 | 83.3 |
| Example 3-3 | 9 | 1 | 22.3 | 5.3 | 15.1 | 1.1 | 83.7 |
| Example 3-4 | 9 | 2 | 25.7 | 6.5 | 14.6 | 1.3 | 83.4 |
| Example 3-5 | 10 | 3 | 28.2 | 6.8 | 15.4 | 1.4 | 83.3 |
| Example 3-6 | 12 | 3 | 30.3 | 6.7 | 17.6 | 1.3 | 83.3 |

By comparing Example 2-4 with Example 3-1 to Example 3-6, it can be seen that when the negative electrode active material of the battery satisfies 0.5 ≤ (Dᵥ90 - Dᵥ10)/Dᵥ50 ≤ 2.0, the low-temperature discharge rate performance of the battery can be further improved.

Example 4-1 to Example 4-5 differed from Example 3-5 in the shaping time and classification yield, ultimately resulting in different Id/Ig values of the material, with specific details provided in Table 4.

The performance was tested according to the aforementioned methods, with results shown in Table 4.

**Table 4**

| Number | Shaping time (h) | Classification yield (%) | Negative electrode active material | Battery performance |
|---|---|---|---|---|
| | | | Id/Ig | -10°C discharge rate (%) |
| Example 3-5 | 4 | 85 | 0.7 | 83.3 |
| Example 4-1 | 3 | 68 | 0.5 | 84.3 |
| Example 4-2 | 2 | 85 | 0.2 | 84.5 |
| Example 4-3 | 6 | 65 | 0.8 | 83.4 |
| Example 4-4 | 2 | 66 | 0.3 | 84.8 |
| Example 4-5 | 2 | 78 | 0.3 | 84.9 |

By comparing Example 3-5 with Example 4-1 to Example 4-5, it can be seen that when the negative electrode active material satisfies 10×d₀₀₂/Lc < 0.109 and the electrolyte additives meet the conditions of this application, the negative electrode active material satisfying 0.2 ≤ Id/Ig ≤ 0.8 can improve the low-temperature discharge rate performance of the battery.

Example 5-1 to Example 5-14 differed from Example 4-5 in the pressing conditions of the negative electrode plate, ultimately resulting in different OI values and compacted densities of the negative electrode plate, with specific details provided in Table 5.

The performance was tested according to the aforementioned methods, with results shown in Table 5.

**Table 5**

| Number | Negative electrode plate | | Battery performance |
|---|---|---|---|
| | PD (g/cm³) | OI Value | -10°C discharge rate (%) |
| Example 4-13 | 1.78 | 20 | 84.9 |
| Example 5-1 | 1.7 | 19 | 85.9 |
| Example 5-2 | 1.55 | 22 | 86 |
| Example 5-3 | 1.78 | 16 | 86.1 |
| Example 5-4 | 1.76 | 13 | 86.2 |
| Example 5-5 | 1.76 | 21 | 86.2 |
| Example 5-6 | 1.77 | 20 | 86.1 |
| Example 5-7 | 1.65 | 15 | 86 |
| Example 5-8 | 1.55 | 16 | 86.5 |
| Example 5-9 | 1.77 | 18 | 86.6 |
| Example 5-10 | 1.78 | 15 | 86.6 |
| Example 5-11 | 1.7 | 25 | 86.5 |
| Example 5-12 | 1.6 | 26 | 86.5 |
| Example 5-13 | 1.55 | 12 | 87 |
| Example 5-14 | 1.65 | 15 | 86.9 |

By comparing Example 4-13 with Example 5-1 to Example 5-14, it can be seen that when the negative electrode active material satisfies 10×d₀₀₂/Lc < 0.109 and the electrolyte additives meet the conditions of this application, the negative electrode plate of the battery satisfying a compacted density of 1.50 g/cm³ ≤ PD ≤ 1.8 g/cm³ can improve the low-temperature discharge rate performance of the battery; and the negative electrode plate of the battery satisfying 10 ≤ OI value ≤ 26 can improve the low-temperature discharge rate performance of the battery. When the negative electrode active material of the battery simultaneously satisfies 1.50 g/cm³ ≤ PD ≤ 1.8 g/cm³ and 10 ≤ OI value ≤ 26, the low-temperature discharge rate performance of the battery can be further improved.

The embodiments described above are only some embodiments of this application, not all embodiments. The detailed description of these embodiments of this application is not intended to limit the scope of the claimed application but merely represents selected embodiments of this application.

## Claims

1. A secondary battery, comprising a negative electrode plate and an electrolyte; wherein a negative electrode active material in the negative electrode plate has a crystal plane spacing of d₀₀₂ nm and the negative electrode active material has a crystal plane stacking thickness of Lc nm, 10×d₀₀₂/Lc < 0.109, and the electrolyte comprises fluoroethylene carbonate and lithium difluorophosphate; wherein based on a mass of the electrolyte, a mass percentage of the fluoroethylene carbonate is S1% and a mass percentage of the lithium difluorophosphate is S2%, 1.5 ≤ S1 ≤ 5.0, and S1 ≥ 4×d₀₀₂ + 0.8×S2.

2. The secondary battery according to claim 1, wherein 10×d₀₀₂/Lc ≤ 0.103.

3. The secondary battery according to claim 1 or 2, wherein 0.1 ≤ S2 ≤ 1.

4. The secondary battery according to any one of claims 1 to 3, wherein the secondary battery satisfies at least one of the following conditions:
(1) $1.5 \leq S 1 \leq 3.0 ;$
(2) $0.330 \leq {d}_{002} \leq 0.340 ;$ or
(3) $23 \leq Lc \leq 35 .$

5. The secondary battery according to any one of claims 1 to 4, wherein the secondary battery satisfies at least one of the following conditions:
(4) $1.7 \leq S 1 \leq 3 ;$ or
(5) $0.2 \leq S 2 \leq 1 .$

6. The secondary battery according to any one of claims 1 to 5, wherein the secondary battery satisfies at least one of the following conditions:
(6) $0.336 \leq {d}_{002} \leq 0.338 ;$ or
(7) $25 \leq Lc \leq 32 .$

7. The secondary battery according to any one of claims 1 to 6, wherein the negative electrode active material satisfies at least one of the following conditions:
(8) a true density of the negative electrode active material is R g/cm³, a specific capacity of the negative electrode active material is Cap mAh/g, and 8 ≤ (R/2.26)×372 - Cap ≤ 31; and optionally, 15 ≤ (R/2.26)×372 - Cap ≤ 28;
(9) an intensity ratio Id/Ig of D peak to G peak in a Raman spectrum of the negative electrode active material satisfies: 0.2 ≤ Id/Ig ≤ 0.8, wherein Id represents a characteristic peak intensity of the Raman spectrum at 1300 cm⁻¹ to 1400 cm⁻¹, and Ig represents a characteristic peak intensity of the Raman spectrum at 1525 cm⁻¹ to 1625 cm⁻¹; and optionally, 0.2 ≤ Id/Ig ≤ 0.5; or
(10) the negative electrode active material comprises at least one of natural graphite or artificial graphite.

8. The secondary battery according to any one of claims 1 to 7, wherein 0.5 ≤ (Dᵥ90 - Dᵥ10)/Dᵥ50 ≤ 2; optionally, 1 ≤ (Dᵥ90 - Dᵥ10)/Dᵥ50 ≤ 1.8; and further optionally, 1.1 ≤ (Dᵥ90 - Dᵥ10)/Dᵥ50 ≤ 1.6.

9. The secondary battery according to any one of claims 1 to 8, wherein the negative electrode plate satisfies at least one of the following conditions:
(11) a compacted density of the negative electrode plate satisfies 1.5 g/cm³ ≤ PD ≤ 1.8 g/cm³; or
(12) the negative electrode plate satisfies: 10 ≤ OI value ≤ 26.

10. An electrical device, comprising the secondary battery according to any one of claims 1 to 9.
